# EUROPEAN PATENT SPECIFICATION

(11) **EP 3 144 049 B1**
(45) Date of publication and mention of the grant of the patent: **19.01.2022**
(21) Application number: 16188096.8
(22) Date of filing: 09.09.2016
(51) Int. Cl.: B01D 53/04, F16L 59/065

(54) **VACUUM INSULATION PANEL COMPRISING A GAS ADSORPTION PACK AND MANUFACTURING METHOD THEREFOR**
VAKUUMISOLATIONSPANEEL UMFASSEND EINEN GASADSORPTIONSPACK UND HERSTELLUNGSVERFAHREN DAFÜR
PANNEAU D'ISOLATION SOUS VIDE COMPRENANT UN PACK D'ADSORPTION DE GAZ ET SON PROCÉDÉ DE FABRICATION

(30) Priority: 15.09.2015 JP 2015181337; 25.03.2016 JP 2016061932
(43) Date of publication of application: 22.03.2017
(73) Proprietor: Mitsubishi Electric Corporation, Chiyoda-ku Tokyo 100-8310 (JP)
(72) Inventor: SUZUKI, Shunkei, Tokyo 100-8310 (JP); SHINOKI, Toshio, Tokyo 100-8310 (JP)
(74) Representative: Sajda, Wolf E.

(56) References cited:
- JP-A- H09 210 290
- JP-A- 2004 218 746
- US-A1- 2003 157 284
- US-A1- 2012 164 365

## Description

### BACKGROUND OF THE INVENTION

### 1. Field of the Invention

The present invention relates to a vacuum insulation panel containing a gas adsorbent and a manufacturing method therefor, and to a gas adsorption pack used in the vacuum insulation panel or the like.

### 2. Description of the Related Art

As general insulation materials for household electric appliances, housing, and the like that require heat retention and cold retention, fiber-based insulation materials, such as glass wool and rock wool, and foamed insulation materials, such as urethane foam and foamed polystyrene, have been used. As an insulation material having insulation performance that is more excellent than that of the above-mentioned insulation materials, a vacuum insulation material has been known.

The vacuum insulation material is produced by filling a core material, e.g., glass fibers or inorganic powder, into a gas barrier container, e.g., an aluminum laminated film, and depressurizing the inside of the gas barrier container. As the vacuum degree in the vacuum insulation panel becomes higher, a gas heat conduction amount decreases, and insulation performance is enhanced.

As a gas present in the vacuum insulation panel, there are given a gas remaining in the vacuum insulation panel at a time of vacuum sealing, a gas released from the surface of a core material or a packaging material after vacuum sealing, and a gas entering the vacuum insulation panel from outside with the passage of time. There has been proposed that a gas adsorbent for adsorbing those gases to increase the vacuum degree be inserted into the gas barrier container together with the core material.

In order to obtain a vacuum insulation panel having a higher vacuum degree, it is important to desorb the gas adsorbed to the surface of the adsorbent before vacuum sealing so as to reduce the amount of a gas taken into the vacuum insulation panel. Therefore, the gas adsorbent is subjected to heat treatment in advance to desorb the adsorbed gas in some cases. In Japanese Patent Application Laid-open JP Hei 9-210 290 A, there is disclosed, for example, a vacuum sealing device including means for heating the gas adsorbent.

Patent Document JP2004218746A relates to a vacuum heat insulating material including a substantially plate-shaped core material constituting two planes whose upper and lower surfaces are opposed to each other, and an adsorbent embedded in the core material, which is wrapped in a jacket material. The first core member is provided at a predetermined interval from the end face of the core member to the middle toward the center of the core member so as to be able to divide the core member right and left halfway. Dividing the core into upper and lower portions with respect to the second vertical cuts and the portion of the core located between the first vertical cut and the second vertical cut, and a horizontal cut provided halfway from the end face of the core material toward the substantially central direction of the core material so that the adsorbent is disposed in the horizontal cut.

### SUMMARY OF THE INVENTION

However, when the method of Japanese Patent Application Laid-Open JP Hei 9-210 290 A is used in the case where a resin material is included in an outer covering material to be subjected to vacuum sealing, the gas adsorbent cannot be heated to a temperature equal to or more than the heat resistant temperature of the resin material included in the outer covering material, and hence it is difficult to desorb a gas sufficiently from the gas adsorbent.

It is an object of the present invention to provide a vacuum insulation panel that facilitates incorporation of a gas adsorbent from which a gas has been sufficiently desorbed even in the case where the resin material is included in the outer covering material and that has excellent capability of keeping the inside vacuum.

It is another object of the present invention to provide a gas adsorption pack that facilitates gas desorption treatment and can be smoothly inserted into a sealed container.

According to the invention, the problem is solved by the subject-matter outlined in the independent claims. Advantageous further developments of the invention are set forth in the dependent claims.

In the following description, the term "embodiment" may have been used for subject-matter that is not part of the invention as defined by the appended claims. Without prejudice to Article 69 EPC and its Protocol, only those examples that comprise all the features of the independent claims are part of the invention and thus embodiments of the invention. Parts of the subject-matter of the description not covered by the claims constitute background art or examples useful for understanding the invention.

A vacuum insulation panel according to one embodiment of the present invention has insulation performance and includes a core material having a plate shape, a gas adsorbent for adsorbing a gas, and an outer covering material, the core material and the gas adsorbent being arranged in the outer covering material. The gas adsorbent has gas desorption capability of desorbing a gas at 400 °C or more.

For example, the vacuum insulation panel is a vacuum insulation panel, including a core material that contains inorganic fibers as a main component, a gas adsorbent, and an outer covering material that contains a resin material in which the core material and the gas adsorbent are accommodated, the inside of the outer covering material being vacuum. The gas adsorbent is a material capable of desorbing a gas at a temperature of 400 °C or more.

The vacuum insulation panel further includes an insulation material that is configured to cover the gas adsorbent, is separated from the core material, contains inorganic fibers as a main component, and has a heat resistant temperature of 400 °C or more. The gas adsorbent is arranged on an outer periphery of the core material as a gas adsorption pack in which the gas adsorbent is covered with the insulation material.

A manufacturing method for a vacuum insulation panel according to one embodiment of the present invention is a manufacturing method for a vacuum insulation panel having insulation performance and including a core material having a plate shape, a gas adsorbent for adsorbing a gas, and an outer covering material, the core material and the gas adsorbent being arranged in the outer covering material, the manufacturing method including: inserting the core material into the outer covering material; preparing the gas adsorbent having gas desorption capability of desorbing a gas at 400 °C or more, the gas adsorbent being separated from the core material; heating the prepared gas adsorbent and inserting the gas adsorbent into an insulation material having a heat resistant temperature of 400 °C or more, to thereby prepare a gas adsorption pack; arranging the prepared gas adsorption pack on an outer periphery of the core material inserted into the outer covering material; and sealing the outer covering material after depressurizing an inside of the outer covering material having the gas adsorption pack arranged therein into vacuum.

The manufacturing method for a vacuum insulation panel is, for example, a manufacturing method for a vacuum insulation panel including a core material that contains inorganic fibers as a main component, a gas adsorbent, and an outer covering material that includes a resin material in which the core material and the gas adsorbent are accommodated, the inside of the outer covering material being vacuum.

The manufacturing method includes: preparing the core material; preparing a gas adsorption pack in which the gas adsorbent is covered with an insulation material that is separated from the core material, contains inorganic fibers as a main component, and has a heat resistant temperature of 400 °C or more; inserting the core material into the outer covering material; heating the gas adsorbent in the gas adsorption pack to 400 °C or more, to thereby desorb an adsorbed gas; inserting the gas adsorption pack into the outer covering material in a state in which the gas adsorbent that has desorbed the gas is at a temperature higher than room temperature, to thereby arrange the gas adsorption pack on an outer periphery of the core material; and sealing the outer covering material after depressurizing the inside of the outer covering material in which the core material and the gas adsorbent are accommodated into vacuum.

A gas adsorption pack according to one embodiment of the present invention is configured to adsorb a gas and includes a gas adsorbent having gas desorption capability of desorbing a gas at 400 °C or more, an insulation material that has a heat resistant temperature of 400 °C or more and is configured to cover the gas adsorbent, and a packaging material that has air permeability and noncombustibility and is configured to cover the insulation material.

The gas adsorption pack includes, for example, a gas adsorbent that can desorb a gas by being at least partially heated to 400 °C or more through microwave irradiation, an insulation material that is configured to cover the gas adsorbent, contains inorganic fibers as a main component, and has a heat resistant temperature of 400 °C or more, and a packaging material that is configured to cover an outside of the insulation material and has air permeability and noncombustibility.

The gas adsorbent to be used in the vacuum insulation panel of the present invention is a material capable of desorbing a gas at a temperature of 400 °C or more, and the vacuum insulation panel further includes the insulation material that is configured to cover the gas adsorbent, is separated from the core material, contains inorganic fibers as a main component, and has a heat resistant temperature of 400 °C or more.

The gas adsorbent is arranged on the outer periphery of the core material as the gas adsorption pack in which the gas adsorbent is covered with the insulation material. Therefore, a vacuum insulation panel that facilitates incorporation of the gas adsorbent from which a gas has been sufficiently desorbed and that has excellent capability of keeping the inside vacuum can be obtained.

Further, the manufacturing method for a vacuum insulation panel of the present invention includes: preparing the gas adsorption pack in which the gas adsorbent is covered with the insulation material that is separated from the core material, contains inorganic fibers as a main component, and has a heat resistant temperature of 400 °C or more; heating the gas adsorbent in the gas adsorption pack to 400 °C or more, to thereby desorb the adsorbed gas; and inserting the gas adsorption pack into the outer covering material in a state in which the gas adsorbent that has desorbed the gas is at a temperature higher than room temperature, to thereby arrange the gas adsorption pack on the outer periphery of the core material.

Therefore, a vacuum insulation panel that facilitates incorporation of the gas adsorbent from which a gas has been sufficiently desorbed and that has excellent capability of keeping the inside vacuum can be obtained.

Further, the gas adsorption pack of the present invention includes the gas adsorbent capable of desorbing a gas by being at least partially heated to 400 °C or more through microwave irradiation, the insulation material that is configured to cover the gas adsorbent, contains inorganic fibers as a main component, and has a heat resistant temperature of 400 °C or more, and the packaging material that is configured to cover the outside of the insulation material and has air permeability and noncombustibility. Therefore, the gas desorption treatment is facilitated, and the gas adsorption pack can be smoothly inserted into the sealed container.

### BRIEF DESCRIPTION OF THE DRAWINGS

- FIG. 1: is a sectional view for illustrating a structure of a vacuum insulation panel according to a first embodiment.
- FIG. 2: is a top view for illustrating the structure of the vacuum insulation panel according to the first embodiment.
- FIG. 3: is a sectional view of an enlarged main portion of the vacuum insulation panel according to the first embodiment.
- FIG. 4: is a schematic view for illustrating a temperature distribution of a gas adsorption pack to be used in the vacuum insulation panel according to the first embodiment.
- FIG. 5: is a graph for showing characteristics obtained by calculating the dependence on a thickness T of the surface temperature of the gas adsorption pack to be used in the vacuum insulation panel according to the first embodiment.
- FIG. 6: is a schematic view for illustrating manufacturing steps of the vacuum insulation panel according to the first embodiment.
- FIG. 7: is a partial front view for illustrating a modified example of the vacuum insulation panel according to the first embodiment.
- FIG. 8: is a partial front view for illustrating a modified example of the vacuum insulation panel according to the first embodiment.
- FIG. 9: is a perspective view for illustrating a modified example of the vacuum insulation panel according to the first embodiment.
- FIG. 10: is a partial sectional view for illustrating a modified example of the vacuum insulation panel according to the first embodiment.
- FIG. 11(a), FIG. 11(b): are each a partial sectional view for illustrating a modified example of the vacuum insulation panel according to the first embodiment.
- FIG. 12(a), FIG. 12(b), FIG. 12(c): are each a partial sectional view for illustrating a modified example of the vacuum insulation panel according to the first embodiment.
- FIG. 13(a) and FIG. 13(b): are each a partial sectional view for illustrating a modified example of the vacuum insulation panel according to the first embodiment.
- FIG. 14: is a partial sectional view for illustrating a modified example of the vacuum insulation panel according to the first embodiment.
- FIG. 15: is a partial sectional view for illustrating a modified example of the vacuum insulation panel according to the first embodiment.
- FIG. 16: is a perspective view for illustrating a modified example of the vacuum insulation panel according to the first embodiment.
- FIG. 17: is a front view for illustrating a modified example of the vacuum insulation panel according to the first embodiment.
- FIG. 18: is a sectional view of a gas adsorption pack according to a second embodiment.
- FIG. 19: is a partial sectional view for illustrating a structure of a vacuum insulation panel according to the second embodiment.
- FIG. 20: is a schematic view for illustrating a gas desorption step of a gas adsorption pack 6 according to a third embodiment.
- FIG. 21: is a partial sectional view for illustrating a configuration of a gas adsorption pack 6 according to a fourth embodiment.
- FIG. 22: is a partial sectional view for illustrating a configuration of a modified example of the gas adsorption pack according to the fourth embodiment.
- FIG. 23: is a top view for illustrating a structure of a vacuum insulation panel according to a fifth embodiment.

### DETAILED DESCRIPTION OF THE PREFERRED EMBODIMENTS

A vacuum insulation panel, a manufacturing method for the vacuum insulation panel, and a gas adsorption pack according to embodiments of the present invention are described below with reference to the drawings. In the following embodiments, a structure, a material, and the like described in an embodiment may be replaced by or added to a structure, a material, and the like described in the other embodiments within the range in which technical inconsistency is not caused.

### First Embodiment

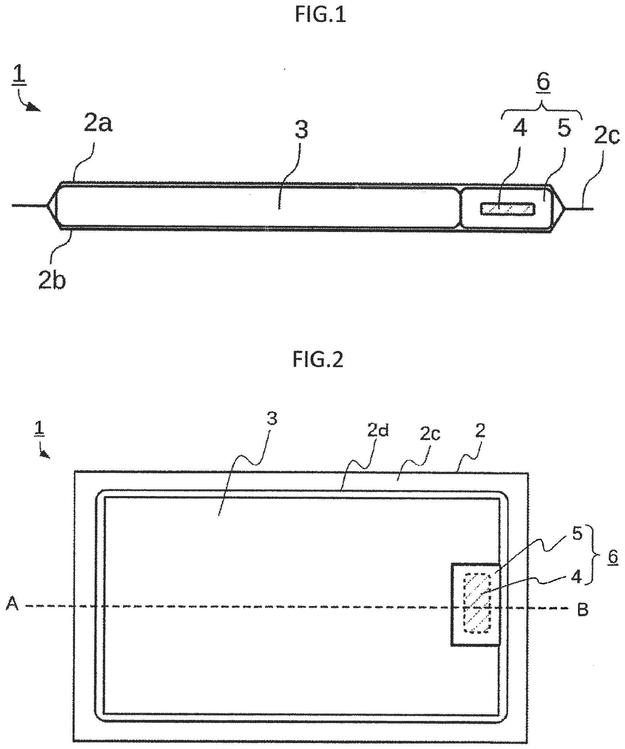

FIG. 1 is a sectional view for illustrating a structure of a vacuum insulation panel according to a first embodiment of the present invention. Further, FIG. 2 is a top view for illustrating the structure of the vacuum insulation panel according to the first embodiment, and FIG. 1 corresponds to a sectional view taken along the broken line A-B of FIG. 2.

A vacuum insulation panel 1 according to the first embodiment of the present invention includes a core material 3 that contains inorganic fibers as a main component, a gas adsorbent 4, and an outer covering material 2 (2a, 2b) that includes a resin material in which the core material 3 and the gas adsorbent 4 are accommodated, the inside of the outer covering material 2 being vacuum.

The vacuum insulation panel 1 further includes an insulation material 5 that is separated from the core material 3 and configured to cover the gas adsorbent 4. The insulation material 5 contains inorganic fibers as a main component. The gas adsorbent 4 and the insulation material 5 are collectively separated from the core material 3, to thereby facilitate gas desorption treatment. The gas adsorbent 4 and the insulation material 5 are described below collectively as a gas adsorption pack 6.

The core material 3 has a substantially plate shape, and the outer shape of the gas adsorption pack 6 has an area that is much smaller than that of the core material 3. The gas adsorption pack 6 is arranged on the outer periphery of the core material 3. In the first embodiment, the gas adsorption pack 6 is arranged on the outer periphery of the core material 3 so that only the gas adsorption pack 6 does not protrude.

A cutout portion is formed in the outer periphery of the core material 3, and the outer shape of the gas adsorption pack 6 is formed so as to fill the cutout portion, to thereby provide a panel shape having a rectangular shape as a whole when the core material 3 and the gas adsorption pack are combined with each other.

FIG. 2 is an illustration of the case in which the core material 3 having a small rectangular cutout portion formed in the middle of a short side in an entire large rectangle is combined with the small rectangular gas adsorption pack 6. Further, the gas adsorption pack 6 may be formed into a longitudinal shape along one side of the outer shape of the core material 3. With this, the gas adsorption pack 6 is prevented from locally protruding from the entire outer shape. Further, it is desired that the thickness of the core material 3 be the same as that of the gas adsorption pack 6.

Those thicknesses are not required to be the same completely, but it is desired that the thickness of the gas adsorption pack 6 be substantially the same as that of the core material 3, for example, fall within the range of from 90 % to 110 % of the thickness of the core material 3. Further, as long as the thickness of the gas adsorption pack 6 is substantially the same as that of the core material 3 after vacuum sealing, the thicknesses may be different before vacuum sealing.

The core material 3 and the gas adsorption pack 6 have a plate shape as a whole, and the plate shape is interposed between two opposed surfaces of the outer covering material 2. The outer covering material 2 typically has a bag shape obtained by causing two sheets 2a and 2b to adhere to each other on a peripheral portion. The outer covering material 2 may have a bag shape obtained by bending one sheet.

As the sheets 2a and 2b forming the outer covering material 2, those having a size slightly larger than that of the entire plate obtained by combining the core material 3 and the gas adsorption pack 6 with each other are used. The opposed surfaces of the sheets 2a and 2b are caused to adhere to each other, to thereby form a sealing portion 2c in a region extending from the outer periphery of the core material 3 or the like.

The sheets are not caused to adhere to each other in part of the sealing portion 2c during manufacturing as described later, and in this state, an inside 2d of the outer covering material 2 is exhausted through the part of the sealing portion 2c. After the inside 2d is brought into a predetermined vacuum degree through the exhaust, the sealing portion 2c is sealed by adhesion. It is desired that at least one side of the gas adsorption pack 6 be adjacent to the sealing portion 2c side in the inside 2d of the outer covering material 2.

Next, each component is described. The core material 3 is formed of inorganic material fibers, e.g., glass fibers or rock wool, and is formed into a plate shape as a whole. The core material 3 is formed, for example, by laminating several to tens of layers of thin fiber sheets of from about 0.5 mm to about 2 mm. Further, short fibers having a diameter of from 1 µm to 10 µm and a length of from 5 mm to 100 mm may be used as the fibers.

It is desired that the fibers be oriented so that the length directions are parallel in a plate-shaped plane in order to enhance insulation performance. In order to enhance productivity, a core material containing randomly oriented fibers may be used.

The outer covering material 2 is formed of a thin sheet-shaped material that a gas does not permeate easily, and is formed of, for example, a laminate of a resin film and an aluminum film. For example, a material in which a nylon layer of 25 µm serving as a protective layer, an aluminum vapor deposition polyethylene terephthalate layer of 12 µm serving as a gas barrier layer, and a straight-chain low-density polyethylene layer of 50 µm serving as a heat-welded layer are laminated can be used as the outer covering material 2.

The aluminum film is a layer excellent in gas barrier property, and an alumina film or the like may be used as a barrier material instead of the aluminum film. The aluminum film, the alumina film, or the like can be formed on the resin film serving as a base by a thin film formation technology, such as vapor deposition or sputtering.

The entire thickness of the outer covering material 2 is small, for example, 100 µm or less, and hence the outer covering material 2 is a flexible film as a whole. The outer covering material 2 accommodating the core material 3 has a configuration in which two surfaces are opposed to each other with a heat-welded layer arranged on an inner side, and the heat-welded layer is heat-fused to provide a sealed bag.

The gas adsorbent 4 is a material capable of adsorbing a gas in the vacuum insulation panel 1 at room temperature even under reduced pressure. For example, as the gas adsorbent 4, synthetic zeolite, silica gel, calcium sulfate, or a mixture thereof, which desorbs the adsorbed gas easily by being heated, may be used. Examples of the gas to be adsorbed by the gas adsorbent 4 include water vapor, carbon dioxide, nitrogen, and oxygen. Synthetic zeolite is also called a molecular sieve and is excellent as the gas adsorbent 4 from the viewpoint that the type of a gas to be adsorbed can be adjusted depending on the difference in composition and crystal structure.

The gas adsorbent 4 adsorbs a gas remaining in the vacuum insulation panel 1 at a time of vacuum sealing, a gas released from the core material 3 or the like after vacuum sealing, and a gas entering the vacuum insulation panel 1 from outside through the external shielding material 2 with the passage of time, to thereby keep the vacuum degree of the inside 2d of the outer covering material 2 satisfactory.

The gas desorption of the gas adsorbent 4 is performed by high-temperature treatment. In order to determine a required treatment temperature, an experiment of checking a change in weight due to heat treatment was performed through use of particles of synthetic zeolite as the gas adsorbent 4. In this case, the reduction in weight is considered to correspond to a gas desorption amount.

As a result of the experiment, a tendency was observed in which the reduction in weight increased as the temperature increased in the heat treatment at 250 °C and 300 °C. The reduction rate of a weight became constant at 400 °C or more.

It is considered that a gas is desorbed more easily at higher temperature, and hence it is considered that gas desorption is performed sufficiently in the heat treatment at 400 °C or more. That is, the gas adsorbent 4 has gas desorption capability of desorbing the adsorbed gas through the heat treatment at 400 °C or more.

The vacuum insulation panel manufactured through the gas desorption treatment at 400 °C and the vacuum insulation panel manufactured through the gas desorption treatment at 300 °C were measured for a heat conductivity after the elapse of 30 days from the manufacturing. The heat conductivity of the vacuum insulation panel manufactured through the gas desorption treatment at 400 °C was 0.040 W/(m·K), whereas that of the vacuum insulation panel manufactured through the gas desorption treatment at 300 °C was 0.047 W/(m·K).

It was found that the vacuum insulation panel manufactured through the gas desorption treatment at 300 °C was slightly inferior in performance. Thus, it was able to be confirmed that the gas desorption treatment at 400 °C or more was effective for realizing a high-performance vacuum insulation panel.

In the present invention, as the gas adsorbent 4, a gas adsorbent capable of being subjected to desorption treatment of a gas through the heat treatment at 400 °C or more is used. Such material is not limited to synthetic zeolite, and a gas adsorbent having a similar action may be used.

Further, the reduction in weight of such material when the heat treatment at 400 °C or more is performed after adsorption of a gas is desirably 10 % or more, more desirably 20 % or more. An inorganic material that has a large surface area because of a number of fine pores and is capable of adsorbing a gas is suitable. The upper limit temperature of the desorption treatment of a gas depends on the heat resistant temperature of the gas adsorbent 4.

When the gas adsorbent is heated to excessively high temperature, there is a risk in that a gas adsorption portion thereof may be damaged to decrease performance. In the case of, for example, synthetic zeolite, the heat resistant temperature thereof is about 800 °C, and hence it is desired that the desorption treatment temperature be set to be lower than the heat resistant temperature, e.g., 700 °C or less.

The insulation material 5 is a heat-resistant material that withstands the treatment temperature for performing desorption of a gas by heating the gas adsorbent 4. When the gas adsorbent 4 is, for example, synthetic zeolite, it is desired that the insulation material 5 have a heat resistant temperature of 400 °C or more as described above. When the insulation material 5 has a heat resistant temperature of 400 °C or more, the insulation material 5 can be used in gas desorption treatment of a number of gas adsorbents 4. The heat resistant temperature may be based on hot shrinkage temperature.

The hot shrinkage temperature refers to a temperature at a time when a shrinkage of the thickness of an insulation material having a diameter of 50 mm and a thickness of from 50 mm to 80 mm reaches 10 % in the case where a disc-shaped weight of about 100 g is placed on the insulation material, and the insulation material is increased in temperature at 3 °C/min in a furnace.

Further, it is desired that the insulation material 5 be excellent in insulation performance so that the temperature of the outer side of the insulation material 5 is significantly lower than that of the gas adsorbent 4 under a state in which the insulation material 5 holds therein the gas adsorbent 4 at high temperature after the gas desorption treatment. The insulation performance can be based on a heat conductivity. The heat conductivity may be measured by a heat flow meter method involving interposing an insulation material between a heating plate and a cooling plate and calculating a heat conductivity from the amount of transferred heat.

The insulation material 5 is a material that contains inorganic fibers as a main component and includes a number of gaps between the fibers. The insulation material 5 is a material, for example, in which a space occupies 80 % or more of the entire volume. The insulation material 5 may contain a small amount of a heat-resistant material having a particle shape or the like. As the inorganic fibers, the same material as that of the core material 3, e.g., glass fibers or rock wool, may be used. As the glass fibers, for example, fibers having a softening point of 800 °C or more, such as E-glass (softening point: 840 °C) and T-glass (softening point: 1,000 °C or more) having higher heat resistance, may be used.

The core material 3 is not required to have heat resistance to high temperature, and hence materials containing a relatively large amount of a resin binder for fixing the fibers may also be used. However, it is desired that the inorganic fibers to be used as the insulation material 5 contain a resin component in an amount as small as possible.

When the core material 3 contains a resin, it is preferred that the ratio (weight ratio) of the resin contained in the insulation material 5 be smaller than that of the core material 3. In the inorganic fibers to be used as the insulation material 5, it is preferred that the use amount of a resin binder or the like be very small, for example, less than 0.5 mass % with respect to the entire amount of the core material 3, and it is more preferred that the inorganic fibers contain no resin material.

It is preferred that the core material 3 be a material having heat resistance because the kinds of materials can be reduced when the same material as that of the core material 3 is used for the insulation material 5. A fiber material having a heat resistant temperature higher than that of the core material 3 may be used for the insulation material 5.

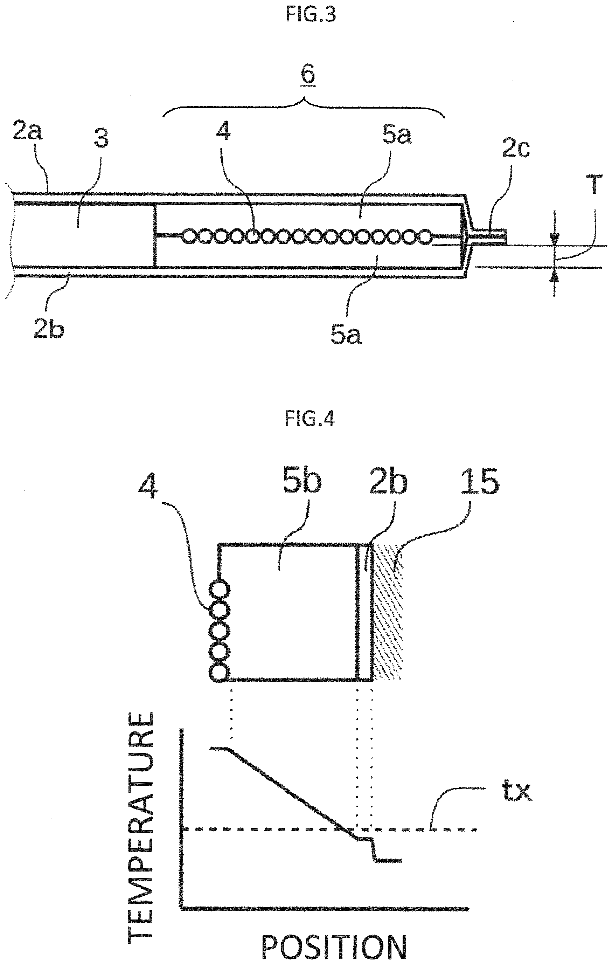

FIG. 3 is a sectional view for illustrating an enlarged main portion of the vacuum insulation panel 1 according to the first embodiment. The gas adsorption pack 6 has a structure in which the gas adsorbent 4 is covered with the insulation material 5, and FIG. 3 is an illustration of a structure in which the gas adsorbent 4 is interposed between two fiber sheets 5a and 5b of the insulation material 5.

The thickness of the gas adsorbent 4 is small, and the thickness of the fiber sheets 5a and 5b is set to be larger than that of the gas adsorbent 4. Further, it is desired that the gas adsorbent 4 interposed between the fiber sheets 5a and 5b be arranged on a slightly inner side from end portions of the fiber sheets 5a and 5b.

When the gas adsorbent 4 is arranged up to the end portions of the fiber sheets 5a and 5b, there is a risk in that the gas adsorbent 4 may leak from the gas adsorption pack 6 due to vibration or the like to reach the outer covering material 2, to thereby damage the outer covering material 2. Further, it is desired that the fiber sheets 5a and 5b on the periphery of a portion, in which the gas adsorbent 4 is arranged, be brought into close contact with each other without any gap therebetween.

It is desired that the gas adsorbent 4 be formed of, for example, inorganic particles of synthetic zeolite, and it is desired that the size of a mesh opening formed by the superimposed fiber material of the insulation material 5 be larger than the diameter of the particle of the gas adsorbent 4.

As the gas adsorbent 4, for example, inorganic particles having a diameter of from about 0.02 mm to about 3 mm are preferably used, and inorganic particles having a diameter of 0.1 mm or more are more preferably used. A synthetic zeolite bead type (from 8 mesh to 12 mesh) having a diameter of from 1.5 mm to 2.4 mm may also be used satisfactorily. When inorganic particles having a small diameter are used, there is a risk in that the inorganic particles may pass through gaps of the fiber material to leak outside of the gas adsorption pack 6.

However, even when very small inorganic particles leak outside in a very small amount, the outer covering material 2 is hardly influenced, and hence the inorganic particles may contain a small amount of particles having a diameter of less than 0.02 mm. Further, when larger inorganic particles are used, it takes time to desorb a gas through the heat treatment, and hence it is desired that the inorganic particles be appropriately small.

FIG. 4 is a schematic view for illustrating a temperature distribution of the gas adsorption pack 6 to be used in the vacuum insulation panel 1 according to the first embodiment. FIG. 4 is an illustration of a temperature distribution in the thickness direction of the outer covering material 2b when the gas adsorbent 4 is at high temperature.

An upper half of FIG. 4 is an illustration in which the gas adsorbent 4, the fiber sheet 5b on one side, the outer covering material 2b, and a placing stand 15 on which the outer covering material 2b is placed are superimposed on one another in the thickness direction. A lower half of FIG. 4 is a graph for showing a temperature corresponding to each position in the upper half of FIG. 4 as a temperature at a thickness direction position.

The heat of the gas adsorbent 4 is released through the placing stand 15 in addition to radiation and convection. When the fiber sheet 5b has sufficiently high insulation performance, even in the case where the temperature of the gas adsorbent 4 is more than a heat resistant temperature tx of the outer covering material 2b, the temperature of a portion in contact with the outer covering material 2b becomes the heat resistant temperature tx or less.

For this purpose, it is appropriate that a fiber sheet having a small heat conductivity and a large thickness be used as the fiber sheet 5b. When a thickness T of the insulation material 5 from the gas adsorbent 4 to the surface of the gas adsorption pack 6 is set to be sufficiently large, the gas adsorbent 4 can be installed in the outer covering material 2 containing a resin material even when the gas adsorbent 4 is at high temperature.

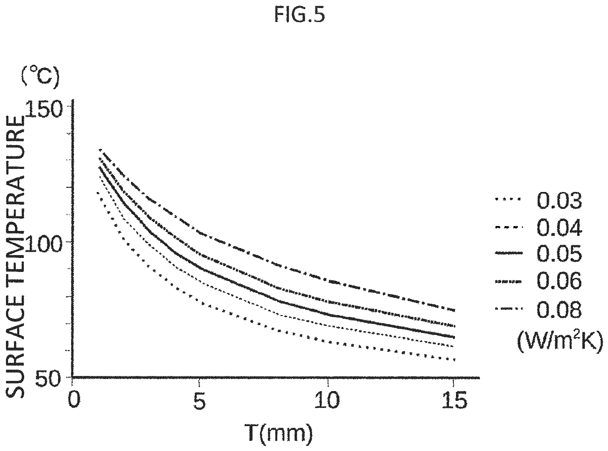

FIG. 5 is a graph for showing characteristics obtained by calculating the dependence on the thickness T of the surface temperature of the gas adsorption pack 6 to be used in the vacuum insulation panel 1 according to the first embodiment. FIG. 5 is a graph for showing the temperature of the surface of the insulation material 5 when the thickness T of the insulation material 5 is changed in the case where the insulation material 5 has a heat conductivity of 0.03 W/(m·K), 0.04 W/(m·K), 0.05 W/(m·K), 0.06 W/(m·K), and 0.08 W/(m·K).

In order to incorporate the resin film into the outer covering material 2, the heat resistant temperature of the outer covering material 2 is about 100 °C or less, and the temperature of the surface of the gas adsorption pack 6 is desirably 100 °C or less, more desirably 80 °C or less.

It is understood from FIG. 5 that in order to set the temperature of the surface of the gas adsorption pack 6 to 100 °C or less, it is only necessary that the thickness T in the case of using the insulation material 5 having a heat conductivity of 0.08 W/(m·K) be set to 5 mm or more, and the thickness T in the case of using the insulation material 5 having a heat conductivity of 0.03 W/(m·K) be set to 2 mm or more.

Further, in order to set the temperature of the surface of the gas adsorption pack 6 to 80 °C or less, it is only necessary that the thickness T in the case of using the insulation material 5 having a heat conductivity of 0.08 W/(m·K) be set to 13 mm or more, and the thickness T in the case of using the insulation material 5 having a heat conductivity of 0.03 W/(m·K) be set to 4 mm or more. Although not shown in FIG. 5, materials having a heat conductivity of 0.1 W/(m·K) or less may also be used. As the insulation material 5, a material having a heat conductivity of 0.1 W/(m·K) or less and a thickness of 2 mm or more may be used.

Further, the thickness of the insulation material 5 of FIG. 5 is a thickness before vacuum sealing, and the insulation material 5 is compressed with an atmospheric pressure through the outer covering material 2 when sealed in vacuum. Therefore, the thickness T in a state of the vacuum insulation panel 1 is reduced by from about 10 % to about 50 %.

When the reduction rate of a thickness is assumed to be 20 %, the thickness of the insulation material 5 in which the thickness T is set to 2 mm or more, 4 mm or more, 5 mm or more, or the like becomes 1.6 mm or more, 3.2 mm or more, 4 mm or more, or the like, respectively, in a state of the vacuum insulation panel 1. Thus, when the insulation material 5 in which the reduction rate of a thickness is relatively large, for example, 30 % or more is used, it is also easy to apply the present invention to a thin vacuum insulation panel.

Therefore, as a material for the insulation material 5, for example, a material having a thickness before vacuum sealing larger than that of the core material 3 may be used. Further, as a material for the insulation material 5, a material having a fiber bulk density before vacuum sealing smaller than that of the core material 3 may be used.

Meanwhile, the thickness of the core material 3 is determined based on the specification of the vacuum insulation panel 1, and when the thickness T of the insulation material 5 is larger than a half of the thickness of the core material 3, there is a problem in that only the thickness of a portion in which the gas adsorption pack 6 is inserted increases in a state of the vacuum insulation panel 1.

Such case occurs, in particular, when the thickness of the vacuum insulation panel 1 is set to be thin, for example, 10 mm or less. Therefore, in this case, it is desired that a material having a heat conductivity of 0.06 W/(m·K) or less be used as the insulation material 5, and it is more desired that a material having a heat conductivity of 0.05 W/(m·K) or less be used.

Further, in the foregoing, it is assumed that the gas adsorbent 4 at a temperature of 150 °C is placed in the outer covering material 2. However, by enhancing the heat resistance characteristics of the insulation material 5, the gas adsorbent 4 even at a temperature higher than 150 °C can be placed in the outer covering material 2.

An adsorbent such as synthetic zeolite is excellent as a material for the gas adsorption pack 6 and has high gas adsorption ability, for example, even at a temperature higher than 100 °C. That is, unless synthetic zeolite is placed in a bag of the outer covering material 2 under a state of a temperature higher than 100 °C, and vacuum sealing treatment is started, even when desorption treatment is performed as a high temperature, there is a problem in that synthetic zeolite may adsorb a surrounding gas until synthetic zeolite is cooled to 100 °C or less while being placed in the bag in a state of being cooled to 100 °C or less.

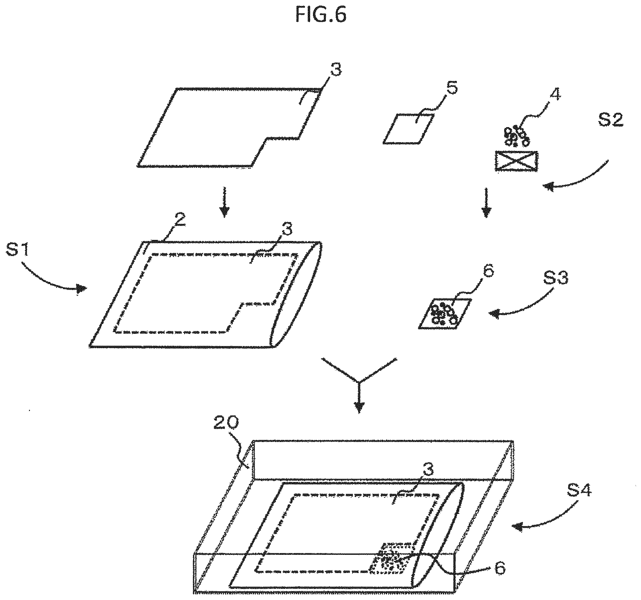

In view of the foregoing, manufacturing of the vacuum insulation panel 1 according to the first embodiment includes the step of placing the gas adsorbent 4 into a bag of the outer covering material 2 while keeping the gas adsorbent 4 at high temperature. FIG. 6 is a schematic view for illustrating manufacturing steps of the vacuum insulation panel 1 according to the first embodiment.

First, the core material 3 that contains inorganic fibers as a main component, the gas adsorbent 4, and the insulation material 5 having heat resistance are prepared. Next, the core material 3 is inserted into a bag formed of the outer covering material 2 (Step S1). At this time, at least part of the outer periphery of the bag is brought into a non-adhesion state.

Further, when a cutout portion is formed in the outer periphery of the core material 3, the cutout portion is arranged toward a non-adhesion portion of part of the outer periphery of the bag. Further, the gas adsorbent 4 is subjected to heat treatment to desorb an adsorbed gas (Step S2). The gas adsorbent 4 subjected to the heat treatment is inserted into the insulation material 5 while the gas adsorbent 4 is kept at high temperature, to thereby provide the gas adsorption pack 6 (Step S3).

Then, the outer covering material 2 having the core material 3 inserted therein is placed in a vacuum sealing device 20, and the gas adsorption pack 6 is inserted into the outer covering material 2 through the non-adhesion portion to be arranged on the outer periphery of the core material 3. When the cutout portion is formed in the core material 3, the gas adsorption pack 6 is arranged so as to be matched with the cutout portion.

Alternatively, when the gas adsorption pack 6 has an elongated shape, the gas adsorption pack 6 is arranged so that the longitudinal direction thereof is matched with one side of the core material 3. At this time, it is only necessary that the gas adsorption pack 6 be inserted (Step S4) while the gas adsorbent 4 is kept in a high temperature state without being decreased to room temperature after the desorption of the gas (Step S2). It is desired that the gas adsorbent 4 be at a temperature higher than 100 °C.

Then, the reduction in pressure of the inside of the outer covering material 2 is started immediately, and when the reduction in pressure is performed until a predetermined vacuum degree is obtained or for a predetermined period of time, the part of the outer periphery of the bag, which has been brought into a non-adhesion state, is sealed (Step S5). As described above, vacuum sealing is performed while the gas adsorbent 4 is at high temperature. Therefore, the gas adsorbent 4 is prevented from adsorbing a gas during vacuum sealing, and the vacuum degree of the inside of the vacuum insulation panel 1 can be made satisfactory.

As described above, the vacuum insulation panel 1 according to the first embodiment has a structure in which the gas adsorbent 4 is covered with the insulation material 5 that is separated from the core material 3 and contains heat-resistant inorganic fibers to provide the gas adsorption pack 6, and the gas adsorption pack 6 is arranged on the outer periphery of the core material 3. The gas adsorbent 4 can be subjected to gas desorption treatment at 400 °C or more, and hence the time required for desorption can be shortened.

Further, the heat resistant temperature of the insulation material 5 is 400 °C or more, and hence the gas adsorption pack 6 facilitates the treatment of desorbing a gas at high temperature from the gas adsorbent 4. Further, even when the outer covering material 2 that contains a resin material is used, the gas adsorbent 4 can be inserted into the outer covering material 2 while the gas adsorbent 4 is at high temperature. Thus, the adsorption of a gas after the gas desorption treatment can be reduced, and hence a high-performance vacuum insulation panel can be realized.

The amount of a gas to be adsorbed by the gas adsorbent 4 before sealing is reduced, and the gas adsorbent 4 can adsorb a gas entering the sealed structure from outside and a gas generated in the sealed structure for a long period of time. The gas adsorbent 4 is subjected to desorption treatment in the form of the gas adsorption pack 6 and is arranged on the outer periphery of the core material 3 in the form of the gas adsorption pack 6. Therefore, workability is satisfactory, and productivity is also enhanced.

Further, in the first embodiment, the core material 3 and the gas adsorption pack 6 are prepared, and the gas adsorbent 4 in the gas adsorption pack 6 is heated to desorb an adsorbed gas. Then, the gas adsorbent 4 is inserted into the outer covering material 2 under a state in which the temperature of the gas adsorbent 4 is higher than room temperature and arranged on the outer periphery of the core material 3, to thereby manufacture the vacuum insulation panel 1. Therefore, the gas adsorbent 4 can be prevented from adsorbing a gas again after gas desorption, and a high-performance vacuum insulation panel can be manufactured.

The gas adsorbent 4 is set to have a small thickness in the insulation material 5 and hence has a large surface area, to thereby facilitate gas desorption. However, the gas adsorbent 4 is formed of an aggregate of particles of an inorganic material. Therefore, in particular, when the gas adsorbent 4 is formed of particles of an infinite form, the gas adsorbent 4 is harder than the core material 3 that contains inorganic fibers as a main component and lacks flexibility in most cases.

There is no problem when the vacuum insulation panel 1 is used in a planar state, but there may arise a problem in that, when the vacuum insulation panel 1 is bent, a region of the gas adsorbent 4 is not bent easily as compared to a region of the core material 3. When the gas adsorbent 4 is locally placed in the core material 3, the gas adsorbent 4 may impair the ease of bending of the core material 3. However, in the vacuum insulation panel 1 according to the first embodiment, the gas adsorbent 4 is arranged on the outer periphery of the core material 3, and hence such problem is less liable to occur.

As a mode of arranging the gas adsorption pack 6 on the outer periphery of the core material 3, there are various structures besides the above-mentioned mode, and hence those structures are described below as modified examples.

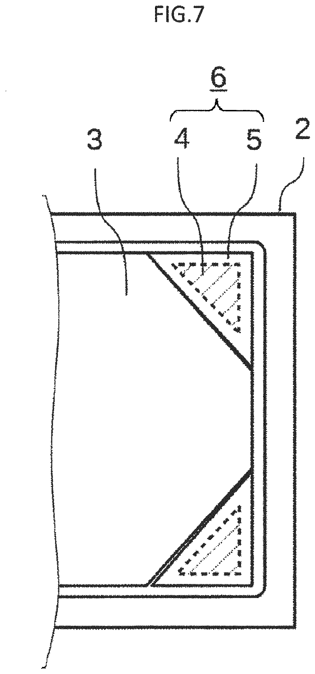

FIG. 7 is a partial front view for illustrating a modified example of the vacuum insulation panel 1 according to the first embodiment and is an illustration of a structure in which the outer shape of the core material 3 is formed into a rectangular shape having cut corner portions, and the outer shape of the gas adsorption pack 6 is formed into a triangular shape having a cut corner portion. FIG. 7 is an illustration of a case in which the gas adsorption pack 6 is arranged in two corner portions. The gas adsorbent 4 that is harder than the core material 3 is arranged in the corner portion, and hence it is effective for reinforcing the corner portion.

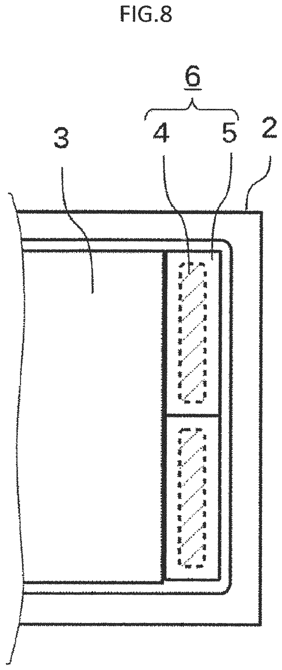

FIG. 8 is a partial front view for illustrating a modified example of the vacuum insulation panel 1 according to the first embodiment and is an illustration of a structure in which the outer shape of the core material 3 is formed into a rectangular shape and the elongated gas adsorption pack 6 is arranged along one side of the core material 3. FIG. 8 is an illustration of a configuration in which the gas adsorption pack 6 is divided into two with respect to one side direction of the core material 3.

In this structure, the outer shape of the core material 3 can be processed easily. Further, the gas adsorption pack 6 having a length divided into a plurality of lengths with respect to one side is arranged. Therefore, the gas adsorption pack 6 becomes small, and the gas adsorption pack 6 can be subjected to the heat treatment easily.

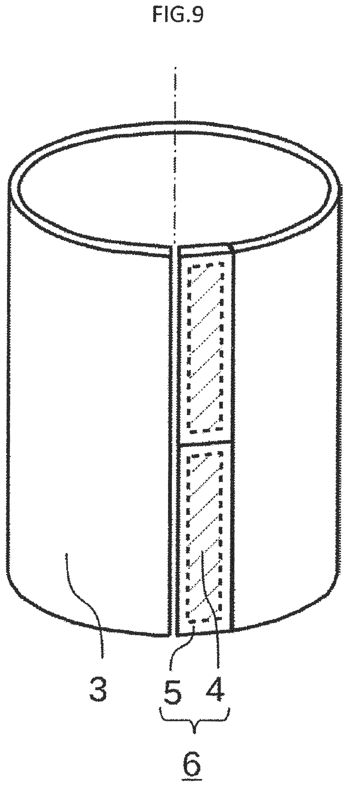

FIG. 9 is a perspective view for illustrating a modified example of the vacuum insulation panel according to the first embodiment and is an illustration of a state in which the vacuum insulation panel of FIG. 8 is bent in a cylindrical shape. In FIG. 9, the outer covering material 2 is omitted.

One side of the core material 3 at which the gas adsorption pack 6 is arranged is made parallel to an axis of the cylinder, to thereby provide arrangement in which the gas adsorption pack 6 extends in an elongated manner in parallel to the axis of the cylinder. Therefore, the gas adsorption pack 6 is not present in a portion of the core material 3 forming a curved surface of the cylinder, and hence the gas adsorbent 4 does not impair the ease of bending of the core material 3.

The gas adsorption pack 6 also has various structures besides the above-mentioned structure, and hence those structures are described below as modified examples.

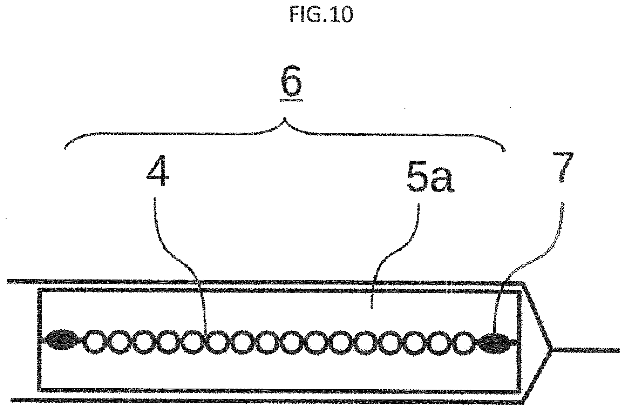

FIG. 10 is a partial sectional view for illustrating a modified example of the vacuum insulation panel 1 according to the first embodiment. The gas adsorbent 4 is arranged as a layer shape interposed between two surfaces of the insulation material 5 in the same way as in the gas adsorption pack 6 described above except that an adhesion portion 7 is formed between the two surfaces of the insulation material 5 on the periphery of the gas adsorbent 4. The adhesion portion 7 is required to have heat resistance similarly to the insulation material 5, and hence a heat-resistant inorganic adhesive may be used for the adhesion portion 7.

Alternatively, the insulation material 5 may be fused by local high-temperature treatment. The two surfaces of the insulation material 5 holding the gas adsorbent 4 therebetween are fixed, and hence an integral structure of the gas adsorption pack 6 becomes strong, with the result that the gas adsorbent 4 is less liable to leak from the insulation material 5.

When the hard gas adsorbent 4 is brought into contact with the outer covering material 2, there is a risk in that the outer covering material 2 is damaged to cause leakage of the gas adsorbent 4. However, in the structure of this modified example, the risk can be reduced. Further, the gas adsorption pack 6 can be handled easily.

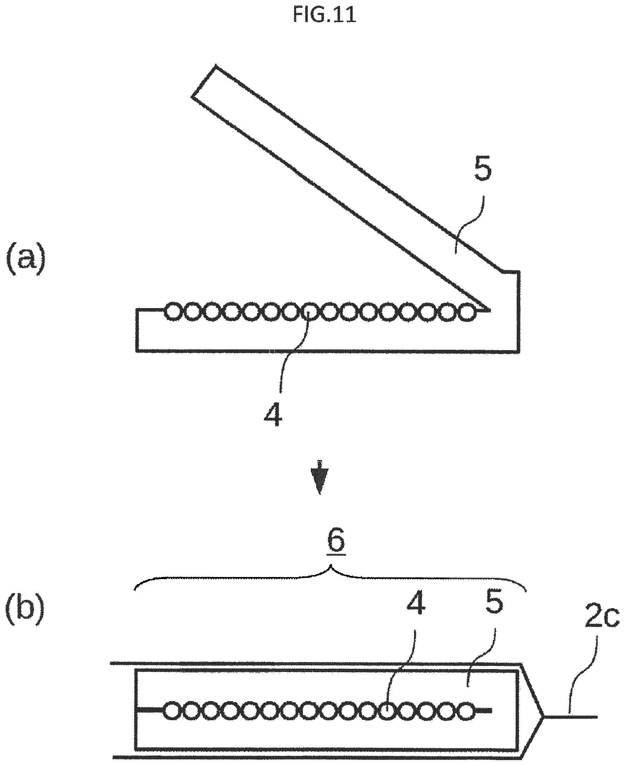

FIG. 11(a) and FIG. 11(b) are each a partial sectional view for illustrating a modified example of the vacuum insulation panel 1 according to the first embodiment. FIG. 11(a) is a sectional view for illustrating a state of manufacturing the modified example of the gas adsorption pack 6. FIG. 11(b) is a partial sectional view for illustrating a structure in which the gas adsorption pack 6 is incorporated.

The insulation material 5 of the gas adsorption pack 6 according to this modified example has a structure in which a plate-shaped material is cut open in a state of being partially connected. The gas adsorption pack 6 has a structure in which the gas adsorbent 4 is interposed between the cut-open portions of the insulation material 5.

Further, the connected portion of the insulation material 5 is arranged so as to be directed to the sealing portion 2c side of the outer covering material 2. The sealing portion 2c side has a structure in which the insulation material 5 is connected, and hence the gas adsorbent 4 does not leak. Further, the cut-open portions are held in abutment against the core portion 3 on the opposite side to the sealing portion 2c, and hence the gas adsorbent 4 is less liable to leak.

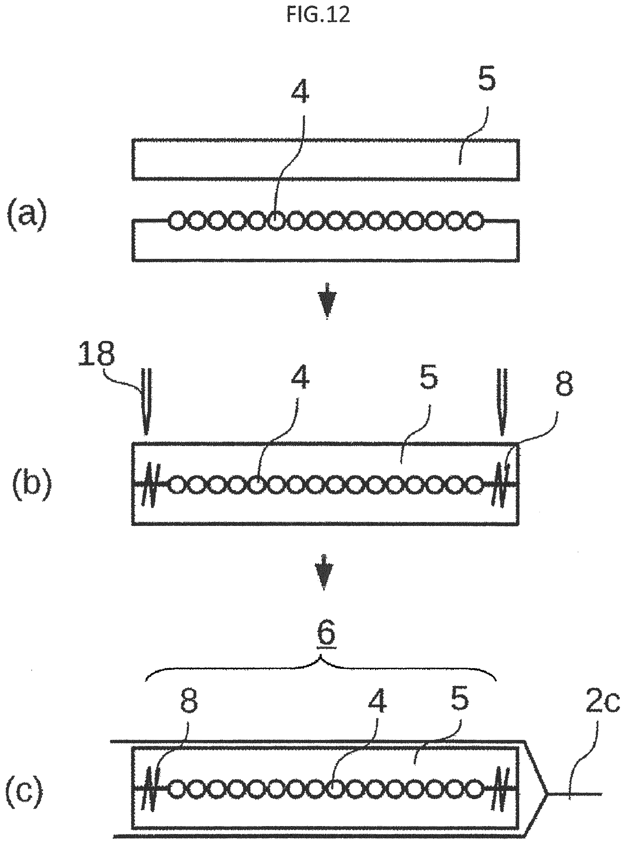

FIG. 12(a), FIG. 12(b), and FIG. 12(c) are each a partial sectional view for illustrating a modified example of the vacuum insulation panel 1 according to the first embodiment. FIG. 12(a) and 12B are each a sectional view for illustrating a state of manufacturing the modified example of the gas adsorption pack 6. FIG. 12(c) is a partial sectional view for illustrating a structure in which the gas adsorption pack 6 is incorporated.

The gas adsorption pack 6 according to this modified example is the same as that in the case of FIG. 10 in that the gas adsorbent 4 is interposed between two surfaces of the insulation material 5, and the two surfaces of the insulation material 5 are caused to adhere to each other on the periphery of the gas adsorbent 4.

However, the gas adsorption pack 6 according to this modified example is different from that in the case of FIG. 10 in that an adhesion portion 8 is formed by needle punching. After the two surfaces of the insulation material 5 are joined to each other as illustrated in FIG. 12(b), the periphery of the gas adsorbent 4 is pierced with a needle 18.

With this, the fibers of one of the two surfaces of the insulation material 5 enter the other surface, to thereby cause the two surfaces to adhere to each other. As compared to the case of FIG. 10, an adhesive material, local heating, or the like is not required, and hence the vacuum insulation panel can be manufactured at low cost.

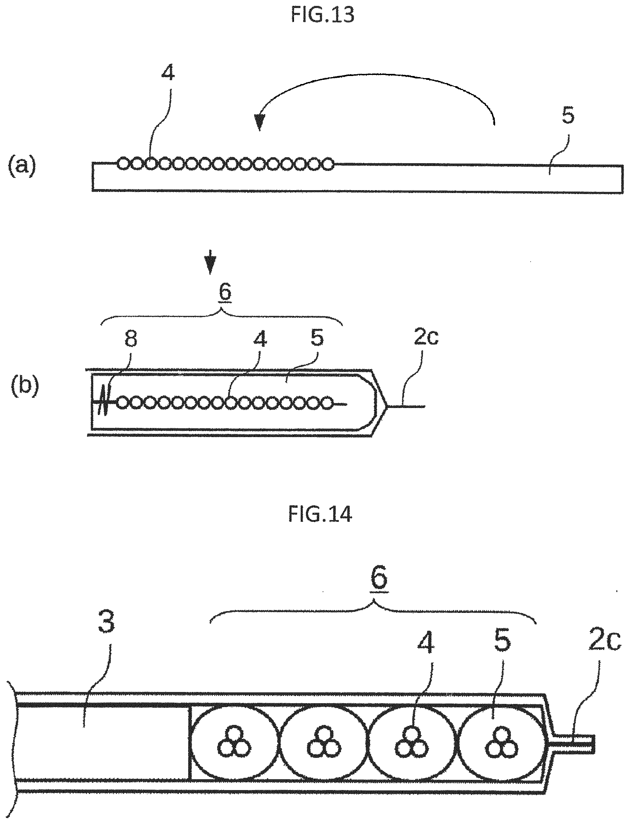

FIG. 13(a) and FIG. 13(b) are each a partial sectional view for illustrating a modified example of the vacuum insulation panel 1 according to the first embodiment. FIG. 13(a) is a sectional view for illustrating a state of manufacturing the modified example of the gas adsorption pack 6. FIG. 13(b) is a partial sectional view for illustrating a structure in which the gas adsorption pack 6 is incorporated.

The gas adsorption pack 6 according to this modified example has a structure in which one sheet of the insulation material 5 having a sheet shape is bent, and the gas adsorbent 4 is interposed between two surfaces formed by the bending of the insulation material 5. Further, the adhesion portion 8 is formed by needle punching so that the bent insulation material 5 is not opened. The adhesion portion 7 may be formed instead of the adhesion portion 8 through use of an adhesive or the like. Further, the bent portion is arranged so as to be directed to the sealing portion 2c side of the outer covering material 2.

Thus, as in the case of FIG. 11(a) and FIG. 11(b), the sealing portion 2c side has a structure in which the insulation material 5 is connected, and hence the gas adsorbent 4 does not leak. Further, the cut-open portions are held in abutment against the core portion 3 on the opposite side to the sealing portion 2c, and hence the gas adsorbent 4 is less liable to leak.

FIG. 14 is a partial sectional view for illustrating a modified example of the vacuum insulation panel 1 according to the first embodiment. The gas adsorption pack 6 according to this modified example has a structure in which the gas adsorbent 4 is arranged in a center portion of the elongated cylindrical insulation material 5. The diameter of the cylinder is set to be substantially the same as the thickness of the core material 3. The cylindrical insulation material 5 can be produced easily by winding a thin sheet-shaped insulation material.

In the structure in which the gas adsorbent 4 is wound with the sheet-shaped structure, a gap connected to outside is absent in the insulation material 5 on the periphery of the gas adsorbent 4, and hence the gas adsorbent 4 is less liable to leak outside. Further, the thickness of the gas adsorbent 4 in the center portion is set to be smaller than that of the insulation material 5. The cylinder may have an oval shape in which the cylinder is flat in a thickness direction. The gas adsorbent 4 does not have a flat layer shape as described above, and hence the amount of the gas adsorbent 4 that can be included in one cylinder is small.

Therefore, in order to accommodate the gas adsorbent 4 in a desired amount in the outer covering material 2, a plurality of cylindrical gas adsorption packs 6 may be inserted in the outer covering material 2 as illustrated in FIG. 14. The surface of the gas adsorption pack 6 that is brought into contact with the outer covering material 2 is a cylindrical surface.

Therefore, the contact area between the gas adsorption pack 6 and the outer covering material 2 is small as compared to the case where the gas adsorption pack 6 is flat as described above, and the gas adsorption pack 6 slides easily with respect to the outer covering material 2, with the result that the gas adsorption pack 6 can be easily inserted into the outer covering material 2. Further, due to the small contact area, heat is less liable to be transmitted to the outer covering material 2 when the gas adsorbent 4 is at high temperature.

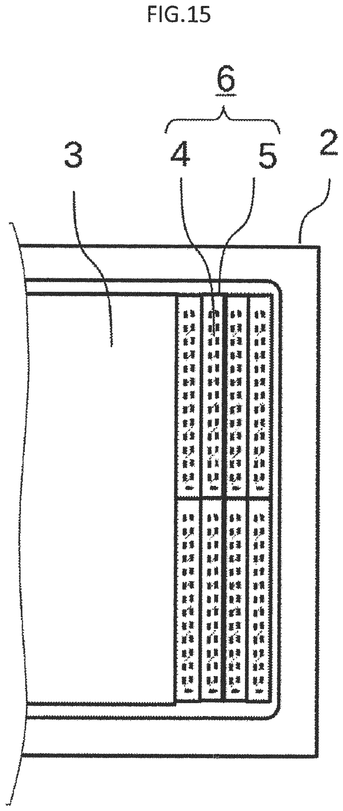

FIG. 15 is a partial front view for illustrating a modified example of the vacuum insulation panel 1 according to the first embodiment and is an illustration of a structural example using the gas adsorption pack 6 of FIG. 14. The longitudinal direction of the cylindrical gas adsorption pack 6 is arranged along one side of the core material 3. A plurality of gas adsorption packs 6 are arranged along the other side of the core material 3.

The length of the gas adsorption pack 6 in the longitudinal direction is halved with respect to one side of the core material 3 so that two gas adsorption packs 6 are arranged with respect to one side. One gas adsorption pack 6 may be arranged with respect to one side. However, when the gas adsorption pack 6 is arranged so as to be divided into a plurality of portions, the gas adsorption pack 6 becomes small, to thereby facilitate the handling during gas desorption treatment.

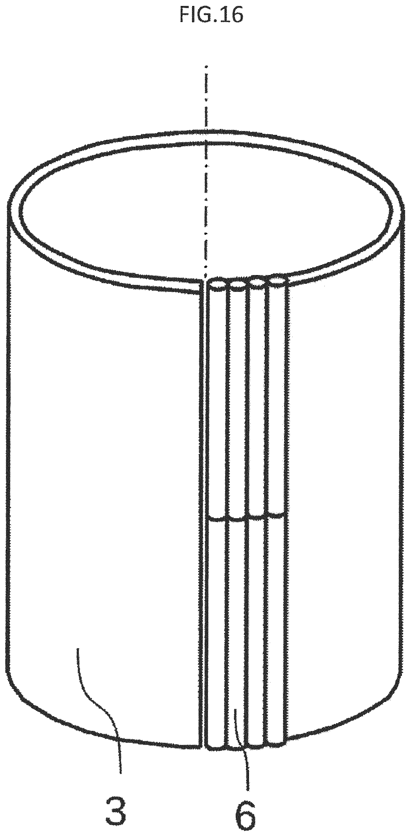

FIG. 16 is a perspective view for illustrating a modified example of the vacuum insulation panel 1 according to the first embodiment, and this modified example is obtained by bending the vacuum insulation panel of FIG. 15 into a cylindrical shape. In the same way as in the case of FIG. 9, the gas adsorption packs 6 are arranged in the longitudinal direction along a side following the axis of bending, and hence the gas adsorption packs 6 do not impair the ease of bending of the core material 3.

Further, the diameter of the cylindrical gas adsorption pack 6 is substantially the same as the thickness of the core material 3, and a plurality of gas adsorption packs 6 arranged in the direction bent into a cylindrical surface are arranged easily so as to be bent in accordance with the cylindrical surface of the bending of the core material 3. Thus, with the structure of this modified example, the panel can be easily bent into a cylindrical shape.

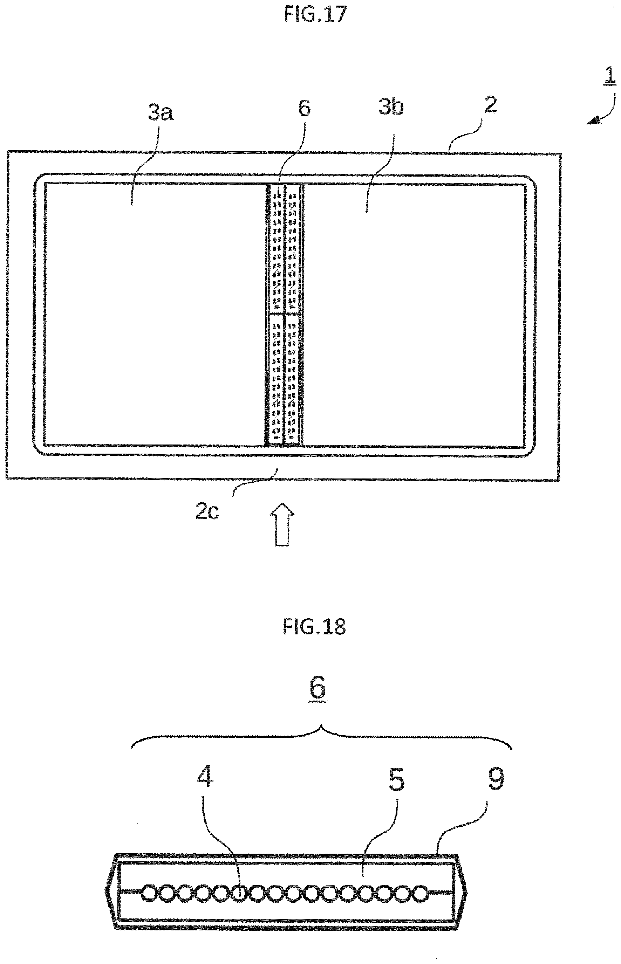

FIG. 17 is a front view for illustrating a modified example of the vacuum insulation panel 1 according to the first embodiment and is an illustration of a structural example using the gas adsorption pack 6 of FIG. 14. This modified example has a configuration in which the gas adsorption pack 6 is arranged between two core materials 3a and 3b.

Also in this case, the gas adsorption pack 6 is positioned on each outer periphery of the core materials 3a and 3b. A circular surface of an end portion of the gas adsorption pack 6 is positioned so as to face the sealing portion 2c of the outer covering material 2. Thus, a portion corresponding to the sealing portion 2c indicated by the blank arrow in FIG. 17 is brought into a non-adhesion state, and in this state, the elongated gas adsorption pack 6 may be slid into between the two core materials 3a and 3b to be sealed.

When the elongated cylindrical gas adsorption pack 6 is used as described above, a vacuum insulation panel can be manufactured easily. Further, the vacuum insulation panel according to this modified example can be easily bent into a cylindrical shape in the same way as in FIG. 16.

### Second Embodiment

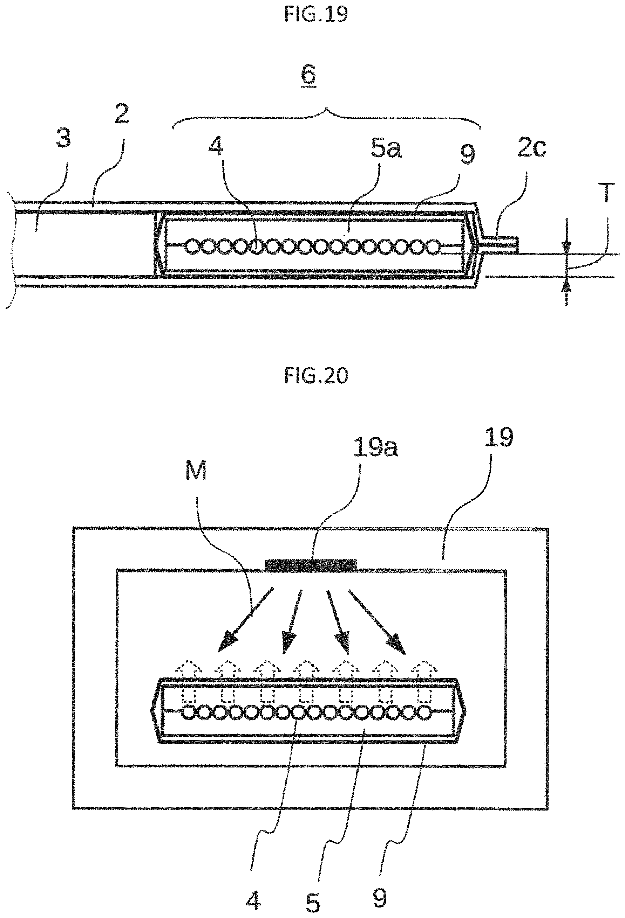

FIG. 18 is a sectional view of the gas adsorption pack 6 according to a second embodiment. FIG. 19 is a partial sectional view for illustrating a structure of a vacuum insulation panel according to the second embodiment and is an illustration of a structure in which the gas adsorption pack 6 of FIG. 18 is arranged on the outer periphery of the core material 3.

The gas adsorption pack 6 according to the second embodiment is the same as that of the first embodiment in that the gas adsorbent 4 is covered with the insulation material 5, but in the second embodiment, an outer side of the insulation material 5 is further covered with a noncombustible packaging material 9. The packaging material 9 has air permeability and is formed into a thin sheet, such as a glass cloth or an alumina cloth.

The inorganic fibers of the insulation material 5 are not bonded to each other sufficiently when the amount of a binder is small, and hence there is a risk in that the inorganic fibers may fall off. However, the inorganic fibers can be prevented from falling off by covering the insulation material 5 with the formed sheet. Thus, it is desired that the packaging material 9 be formed of a fine cloth.

When such gas adsorption pack 6 is used, waste of the inorganic fibers can be prevented from entering the sealing portion 2c when the gas adsorption pack 6 is inserted into the outer covering material 2, and thus, a vacuum insulation panel with high reliability can be obtained. When the gas adsorbent 4 is at high temperature, it is only necessary that, with the thickness T obtained by superimposing the insulation material 5 and the packaging material 9 of the gas adsorption pack 6, the temperature of the surface thereof be controlled to the heat resistant temperature of the outer covering material 2 or less.

Further, the insulation material 5 is arranged between the packaging material 9 and the gas adsorbent 4, and hence the packaging material 9 may have a heat resistant temperature lower than that of the insulation material 5 as long as the gas adsorbent 4 can be selectively heated as described later. Thus, as the packaging material 9, a material having a higher content of a resin binder or the like than that of the insulation material 5 may be used.

As described above, the gas adsorption pack 6 includes the gas adsorbent 4 that is a material configured to desorb an adsorbed gas by being at least partially heated to 400 °C or more through microwave irradiation, the insulation material 5 that is configured to cover the gas adsorbent 4, contains inorganic fibers as a main component, and has a heat resistant temperature of 400 °C or more, and the packaging material 9 that is configured to cover the outer side of the insulation material 5 and has air permeability and noncombustibility.

Therefore, gas desorption treatment can be performed easily, and the gas adsorption pack 6 can be smoothly inserted into the sealed container. Further, the gas adsorption pack 6 is also excellent in safety because the inorganic fibers are prevented from being released. The gas adsorption pack 6 is suitable for not only the vacuum insulation panel but also the application in which gas adsorption treatment and gas desorption treatment are repeatedly performed in a container.

### Third Embodiment

FIG. 20 is a schematic view for illustrating a gas desorption step of the gas adsorption pack 6 according to a third embodiment. The configuration of the gas adsorption pack 6 according to the third embodiment is the same as that of FIG. 18 according to the second embodiment, and the structure in which the configuration of the gas adsorption pack 6 according to the third embodiment is applied to a vacuum insulation panel is the same as that of FIG. 19 according to the second embodiment. Therefore, the description thereof is omitted.

In the gas adsorption pack 6 according to the third embodiment, a material that generates heat to high temperature through microwave absorption is used as the gas adsorbent 4. It is desired that the material for the gas adsorbent 4 generate heat through microwave irradiation of 2.45 GHz that is used in a microwave oven or the like.

Further, as the insulation material 5 and the packaging material 9, a material that generates less heat through microwave absorption, that is, a material having a small dielectric loss is used. With this, when the gas adsorption pack 6 is irradiated with a microwave M in a microwave heating device 19, e.g., a microwave oven, only the gas adsorbent 4 can be selectively heated to high temperature, and the gas desorption treatment is performed significantly easily.

FIG. 20 is a schematic view for illustrating a state in which a microwave oven is used as the microwave heating device 19, and the gas adsorption pack 6 is irradiated with the microwave M from a microwave transmission source 19a. The microwave M passes through the insulation material 5 and the packaging material 9 to be absorbed by the gas adsorbent 4. The gas adsorbent 4 generates heat to release an adsorbed gas. Although a mechanism configured to exhaust air in the microwave heating device 19 of FIG. 20 is not illustrated, it is desired to use a device including such mechanism so that the released gas is not adsorbed again.

The surface of the insulation material 5 is also heated to high temperature to some degree during desorption treatment. However, through adjustment of output of the microwave M, the surface temperature of the insulation material 5 can also be kept at 200 °C or less while the gas adsorbent 4 is kept at, for example, 400 °C or more. After the start of the irradiation with the microwave M, the output of the microwave M is raised to increase the temperature of the gas adsorbent 4.

When the temperature of the gas adsorbent 4 reaches 400 °C or more, the output is lowered, or the temperature may be kept by intermittent irradiation with the microwave M. The output of the microwave M may be adjusted so as to fall within a predetermined temperature range while the temperature of the gas adsorbent 4 during treatment is measured through use of a fiber thermometer or the like.

After that, the gas adsorbent 4 is allowed to cool, and the surface temperature of the insulation material 5 is decreased to the heat resistant temperature or less of the outer covering material 2. Then, the gas adsorbent 4 is immediately inserted into the outer covering material 2 under a state in which the gas adsorbent 4 is at a temperature sufficiently higher than room temperature. Thus, a vacuum insulation panel excellent in performance can be manufactured.

4A-type synthetic zeolite was subjected to gas desorption treatment through microwave heating, and then the 4A-type synthetic zeolite was inserted into the outer covering material 2, to thereby manufacture a vacuum insulation panel. The vacuum insulation panel was evaluated for insulation performance after the elapse of 30 days from the manufacturing, and it was confirmed that satisfactory insulation performance of 0.0040 W/(m·K) was able to be kept.

As a material that can be subjected to gas desorption through microwave absorption, there are given, for example, 4A-type synthetic zeolite and 13X-type synthetic zeolite. Further, as a material for the insulation material 5 and the packaging material 9, which generate less heat through microwave absorption, it is preferred that silica glass, E-glass, or the like be used. Those materials may be used in combination by performing microwave irradiation to confirm increase or non-increase of a temperature.

### Fourth Embodiment

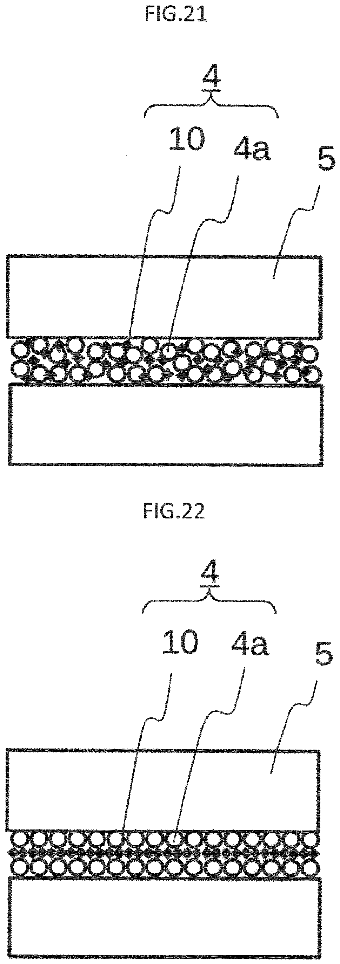

FIG. 21 is a partial sectional view for illustrating a configuration of the gas adsorption pack 6 according to a fourth embodiment. The gas adsorption pack 6 according to the fourth embodiment is the same as those of the above-mentioned embodiments in that the gas adsorbent 4 is covered with the insulation material 5, but the gas adsorption pack 6 according to the fourth embodiment is different from those of the above-mentioned embodiments in that a material containing a microwave absorption material 10 is used as the gas adsorbent 4.

In the fourth embodiment, a material that generates less heat through microwave absorption is used as the insulation material 5 and the packaging material 9 in the same way as in the third embodiment. As compared to a gas adsorption component 4a contained in the gas adsorbent 4, the microwave absorption material 10 is a material that absorbs the microwave M to reach high temperature. The heat generated by the microwave absorption material 10 through irradiation with the microwave M is transmitted to the gas adsorption component 4a, to thereby enable gas desorption treatment.

Thus, the gas adsorption component 4a may be a component that is not increased in temperature through irradiation with the microwave M. For example, synthetic zeolite (5A-type) is a material that is not easily increased to high temperature through microwave irradiation. When a material that absorbs a microwave, such as graphite or iron powder, is mixed with synthetic zeolite, the gas desorption treatment of the gas adsorption component 4a that is not easily increased to high temperature through microwave irradiation can be performed easily.

Besides conductive particles and the like, particles of an inorganic material having a large dielectric loss or the like may be used as the microwave absorption material 10. Further, a fibrous material, such as carbon fibers, may be used instead of the particulate material.

FIG. 21 is an illustration of the gas adsorbent 4 in which the gas adsorption component 4a serving as a first material that is incapable of being increased in temperature to 400 °C through microwave heating is mixed with the microwave absorption material 10 serving as a second material that is increased in temperature to 400 °C or more through microwave heating. It is preferred that materials having different particle diameters be used so that the first material and the second material are brought into contact with each other satisfactorily.

For example, in the case where the first material is zeolite particles, and the second material is graphite or iron particles, when the average particle diameter of the particles of graphite or the like serving as the second material is set to be smaller than that of the zeolite particles serving as the first material, and the particles of the second material are caused to be present between the zeolite particles of the first material, the zeolite particles can be treated satisfactorily, and the situation in which only the second material is increased to high temperature can be prevented.

Silica particles, alumina particles, or the like may be used as the first material, and 4A-type synthetic zeolite or the like that is heated to 400 °C or more through microwave irradiation may be used as the second material. In this case, the gas adsorption component 4a serving as the first material serves as the second material. That is, at least one of the first material or the second material may be a gas adsorption material.

When the particles that are not easily increased in temperature through microwave heating are mixed with the particles that are increased in temperature through microwave heating, the particles that are increased in temperature can be prevented from reaching excessively high temperature. Both the first material and the second material may be gas adsorption materials.

5A-type synthetic zeolite (bead type of from 8 mesh to 12 mesh (diameter: about 1.5 mm to about 2.4 mm)) serving as the gas adsorption component 4a of the first material and graphite having an average particle diameter of 15 µm serving as the microwave absorption material 10 of the second material were mixed at a weight ratio of 2:1.

The mixture was used as the gas adsorbent 4 and subjected to gas desorption through microwave heating, to thereby manufacture the vacuum insulation panel 1. The vacuum insulation panel 1 had a heat conductivity of 0.0040 W/(m·K) after the elapse of 30 days from the manufacturing and hence had satisfactory insulation performance.

Meanwhile, the vacuum insulation panel 1, which was manufactured by using the gas adsorbent 4 formed only of 5A-type synthetic zeolite without addition of the microwave absorption material 10 of the second material, had slightly inferior insulation performance of 0.0055 W/(m·K).

Even the vacuum insulation panel 1, which was manufactured by adding iron powder having an average particle diameter of 28 µm as the microwave absorption material 10 instead of graphite, had a heat conductivity of 0.0039 W/(m·K) after the elapse of 30 days from the manufacturing and hence had satisfactory insulation performance. Thus, it was confirmed that high insulation performance was able to be realized through incorporation of the microwave absorption material 10.

FIG. 22 is a partial sectional view for illustrating a configuration of a modified example of the gas adsorption pack 6 according to the fourth embodiment. This modified example is the same as that of FIG. 21 in that the gas adsorbent 4 contains a mixture of the first material that generates less heat through microwave absorption and the second material that is heated to 400 °C or more through microwave irradiation.

This modified example is different from the configuration of FIG. 21 in that the first material and the second material are laminated in a layer shape. This modified example has a structure in which both surfaces of the layer of the second material that generates heat through microwave absorption is interposed between the layers of the first material that generates less heat through microwave absorption.

When the gas adsorbent 4 is irradiated with the microwave M, the layer of the second material is heated to 400 °C or more, and the generated heat is transmitted to the first material, to thereby enable gas desorption treatment of the gas adsorbent 4. The first material that does not generate heat easily is arranged on the side of the insulation material 5, that is, in an outermost portion in the thickness direction of the layers.

Therefore, even when the layer of the second material is increased to a temperature higher than 400 °C, the insulation material 5 can be adjusted to a temperature of 400 °C or less. That is, the layers of the first material serve as a kind of insulation layer. With this, the heat resistant temperature of the insulation material 5 can be decreased.

### Fifth Embodiment

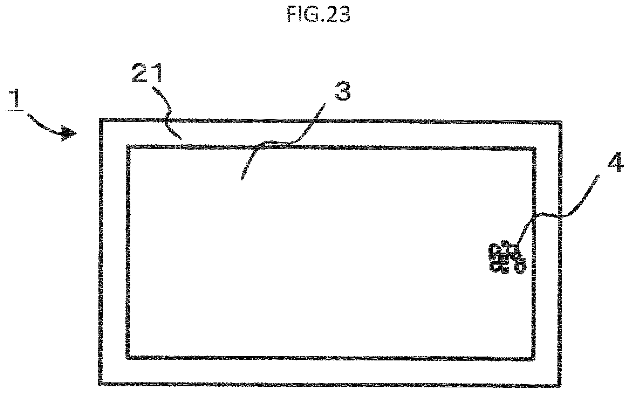

FIG. 23 is a top view for illustrating a structure of a vacuum insulation panel according to a fifth embodiment. The vacuum insulation panel according to the fifth embodiment is the same as those of the above-mentioned embodiments in that the gas adsorbent 4 contains the microwave absorption material 10.

However, the vacuum insulation panel according to the fifth embodiment is different from those of the above-mentioned embodiments in that a gas barrier layer of a nonmetal outer covering material 21 is formed only of a nonmetal barrier layer, such as an alumina vapor deposition film, a silica vapor deposition film, an alumina-silica composite vapor deposition film, polyethylene terephthalate, or an ethylene vinyl alcohol copolymer, unlike a metal film, such as an aluminum film, or a metal vapor deposition film, such as an aluminum vapor deposition film.

As described above, in the vacuum insulation panel according to the fifth embodiment, a metal layer-free structure that does not use a metal layer is applied to the outer covering material 2, and hence the gas adsorbent 4 can be heated through microwave irradiation after the core material 3 is inserted into the outer covering material 2 and the gas adsorbent 4 is inserted into the core material 3.

Therefore, after the microwave irradiation, the inside of the outer covering material 2 can be rapidly reduced in pressure, and vacuum sealing can be performed under a state in which the heated gas adsorbent 4 is kept at higher temperature. Through use of the vacuum sealing device 20 including the microwave heating device 19 therein, the gas adsorbent 4 is heated with a microwave to desorb an adsorbed gas, and then vacuum sealing can be performed without bringing the gas adsorbent 4 into contact with the atmosphere.

The gas adsorbent 4 may be arranged in a heat resistant pack to form a gas adsorption pack. When the gas adsorbent 4 is formed into the gas adsorption pack, gas desorption treatment can be performed easily, and the gas adsorbent 4 can be smoothly inserted into the sealed container.

5A-type synthetic zeolite (bead type of from 8 mesh to 12 mesh (diameter: about 1.5 mm to about 2.4 mm) serving as the gas adsorption component 4a of the first material and graphite having an average particle diameter of 15 µm serving as the microwave absorption material 10 of the second material were mixed at a weight ratio of 2:1. The mixture was used as the gas adsorbent 4 and inserted into the core material 3 enclosed in the nonmetal outer covering material 21.

The resultant was subjected to gas desorption through microwave heating, to thereby manufacture the vacuum insulation panel 1. The vacuum insulation panel 1 had a heat conductivity of 0.0038 W/(m·K) after the elapse of 30 days from the manufacturing and hence had satisfactory insulation performance.

The vacuum insulation panel and the manufacturing method therefor, and the gas adsorption pack to be used in the vacuum insulation pack or the like of the present invention are useful because of excellent performance of adsorbing a gas in a sealed container.

### List of Reference Signs

- 1: vacuum insulation panel,
- 2: outer covering material
- 3: core material
- 4: gas adsorbent
- 5: insulation material
- 6: gas adsorption pack
- 7: adhesion portion
- 8: adhesion portion
- 9: packaging material
- 10: microwave absorption material
- 19: microwave heating device
- 20: vacuum sealing device
- 21: nonmetal outer covering material

## Claims

1. A vacuum insulation panel (1) having insulation performance, comprising a core material (3) having a plate shape, a gas adsorbent (4) for adsorbing a gas, and an outer covering material (2), the core material (3) and the gas adsorbent (4) being arranged in the outer covering material (2), wherein the gas adsorbent (4) has gas desorption capability of desorbing a gas at 400 °C or more,
**characterized in that** the vacuum insulation panel (1) further comprises a gas adsorption pack (6) in which the gas adsorbent (4) is covered with an insulation material (5) having a hot shrinkage temperature of 400 °C or more comprising inorganic fibers, wherein the insulation material (5) is separated from the core material (3).

2. The vacuum insulation panel (1) according to claim 1,
wherein the gas adsorption pack (6) is arranged on an outer periphery of the core material (3).

3. The vacuum insulation panel (1) according to claim 1 or 2,
wherein the core material (3) comprises a concave portion or a cutout portion in part of the outer periphery, and
wherein the gas adsorption pack (6) is arranged on the outer periphery so as to fill the concave portion or the cutout portion.

4. The vacuum insulation panel (1) according to any one of claims 1 to 3, wherein the gas adsorption pack (6) is formed into a longitudinal shape along one side of the outer shape of the core material (3).

5. The vacuum insulation panel (1) according to any one of claims 1 to 4,
wherein the inorganic fibers of the insulation material have a sheet-shaped structure,
wherein the gas adsorbent (4) is held under a state of being interposed between surfaces of the sheet-shaped structure, and
wherein the surfaces of the sheet-shaped structure are caused to adhere to each other in at least part of a periphery of the gas adsorbent (4) or the surfaces of the sheet-shaped structure are heat-welded to each other in the at least part.

6. The vacuum insulation panel (1) according to any one of claims 1 to 5,
wherein the inorganic fibers of the insulation material have a sheet-shaped structure,
wherein the gas adsorbent (4) is held under a state of being wound with the sheet-shaped structure.

7. The vacuum insulation panel (1) according to any one of claims 1 to 6, further comprising a packaging material (9) configured to cover the insulation material (5), wherein the packaging material (9) is a glass cloth or alumina cloth.

8. The vacuum insulation panel (1) according to any one of claims 1 to 7, wherein the gas adsorbent (4) comprises a material capable of adsorbing a gas at room temperature and desorbing the adsorbed gas by being heated at least partially through microwave irradiation.

9. The vacuum insulation panel (1) according to any one of claims 1 to 7,
wherein the gas adsorbent (4) comprises a material obtained by mixing a first material that is incapable of being increased in temperature to 400 °C through microwave irradiation and a second material that is capable of being increased in temperature to 400 °C or more through the microwave irradiation, and
wherein the first material or the second material comprises a gas adsorption material.

10. The vacuum insulation panel (1) according to claim 9,
wherein the first material comprises zeolite particles,
wherein the second material contains graphite particles or iron particles,
wherein the particles of the second material have an average particle diameter smaller than an average particle diameter of the zeolite particles of the first material, and
wherein the particles of the second material are present between the zeolite particles of the first material.

11. The vacuum insulation panel (1) according to claim 8 or 9,
wherein the gas adsorbent (4) is arranged in a layer shape,
wherein an outermost portion of the layer in a thickness direction is covered mainly with the first material, and
wherein the outer covering material (2) has a metal layer-free structure.

12. The vacuum insulation panel (1)
according to any one of claims 1 to 11,
wherein the insulation material (5) has a heat conductivity of 0.1 W/(m·K) or less and a thickness of 2 mm or more.

13. A manufacturing method for a vacuum insulation panel (1) having insulation performance, the vacuum insulation panel (1) comprising a core material (3) having a plate shape, a gas adsorbent (4) for adsorbing a gas, and an outer covering material (2), the core material (3) and the gas adsorbent (4) being arranged in the outer covering material (2), the manufacturing method comprising the following steps:
- inserting the core material (3) into the outer covering material (2);
- preparing the gas adsorbent (4) having gas desorption capability of desorbing a gas at 400 °C or more, the gas adsorbent (4) being separated from the core material (3);
- heating the prepared gas adsorbent (4) to 400 °C or more and inserting the gas adsorbent (4) into an insulation material (5) having a hot shrinkage temperature of 400°C comprising inorganic fibers, to thereby prepare a gas adsorption pack (6);
- arranging the prepared gas adsorption pack (6) on an outer periphery of the core material (3) inserted into the outer covering material (2); and
- sealing the outer covering material (2) after depressurizing an inside of the outer covering material (2) having the gas adsorption pack (6) arranged therein into vacuum,
wherein the insulation material (5) is separated from the core material (3).

## Patentansprüche

1. Vakuumdämmplatte (1) mit Isolationsvermögen, die Folgendes aufweist:
ein Kernmaterial (3), das eine Plattenform aufweist,
ein Gasadsorptionsmittel (4) zum Adsorbieren von Gas und ein äußeres Abdeckmaterial (2),
wobei das Kernmaterial (3) und das Gasadsorptionsmittel (4) in dem äußeren Abdeckmaterial (2) angeordnet sind,
wobei das Gasadsorptionsmittel (4) ein Gasdesorptionsvermögen aufweist, ein Gas bei 400 °C oder mehr zu desorbieren,
**dadurch gekennzeichnet,**
**dass** die Vakuumdämmplatte (1) ferner eine Gasadsorptionspackung (6) aufweist, in der das Gasadsorptionsmittel (4) mit einem Isoliermaterial (5) mit einer Heißschrumpfungstemperatur von 400 °C oder mehr bedeckt ist,
das anorganische Fasern aufweist, wobei das Isoliermaterial (5) von dem Kernmaterial (3) getrennt ist.

2. Vakuumdämmplatte (1) nach Anspruch 1,
wobei die Gasadsorptionspackung (6) an einem Außenumfang des Kernmaterials (3) angeordnet ist.

3. Vakuumdämmplatte (1) nach Anspruch 1 oder 2,
wobei das Kernmaterial (3) einen konkaven Bereich oder einen ausgeschnittenen Bereich in einem Teil des Außenumfangs aufweist, und
wobei die Gasadsorptionspackung (6) am Außenumfang so angeordnet ist, dass sie den konkaven Bereich oder den ausgeschnittenen Bereich ausfüllt.

4. Vakuumdämmplatte (1) nach einem der Ansprüche 1 bis 3,
wobei die Gasadsorptionspackung (6) entlang der einen Seite der äußeren Form des Kernmaterials (3) eine langgestreckte Form aufweist.

5. Vakuumdämmplatte (1) nach einem der Ansprüche 1 bis 4,
wobei die anorganischen Fasern des Isoliermaterials eine flächenkörperförmige Struktur aufweisen,
wobei das Gasadsorptionsmittel (4) in einem Zustand angeordnet ist, indem es zwischen den Oberflächen der flächenkörperförmigen Struktur angeordnet ist, und
wobei dafür gesorgt ist, dass die Oberflächen der flächenkörperförmigen Struktur zumindest in einem Teil der Peripherie des Gasadsorptionsmittels (4) aneinander haften oder die Oberflächen der flächenkörperförmigen Struktur zumindest in diesem Teil miteinander heißverschweißt sind.

6. Vakuumdämmplatte (1) nach einem der Ansprüche 1 bis 5,
wobei die anorganischen Fasern des Isoliermaterials eine flächenkörperförmige Struktur aufweisen,
wobei das Gasadsorptionsmittel (4) in einem Zustand angeordnet ist, indem es mit der flächenkörperförmigen Struktur umwickelt ist.

7. Vakuumdämmplatte (1) nach einem der Ansprüche 1 bis 6,
die ferner ein Verpackungsmaterial (9) aufweist, das so ausgelegt ist, dass es das Isoliermaterial (5) bedeckt, wobei das Verpackungsmaterial (9) ein Glasgewebe oder ein Aluminiumoxidgewebe ist.

8. Vakuumdämmplatte (1) nach einem der Ansprüche 1 bis 7,
wobei das Gasadsorptionsmittel (4) ein Material aufweist, das imstande ist, ein Gas bei Raumtemperatur zu adsorbieren und das adsorbierte Gas zu desorbieren, indem es zumindest teilweise durch Mikrowellenbestrahlung erhitzt wird.

9. Vakuumdämmplatte (1) nach einem der Ansprüche 1 bis 7,
wobei das Gasadsorptionsmittel (4) ein Material aufweist, das erhalten ist durch Mischen eines ersten Materials, dessen Temperatur durch Mikrowellenbestrahlung nicht auf 400 °C erhöht werden kann, und eines zweiten Materials, dessen Temperatur durch eine Mikrowellenbestrahlung auf 400 °C oder mehr erhöht werden kann, und
wobei das erste Material oder das zweite Material ein Gasadsorptionsmaterial aufweist.

10. Vakuumdämmplatte (1) nach Anspruch 9,
wobei das erste Material Zeolithpartikel aufweist,
wobei das zweite Material Graphitpartikel oder Eisenpartikel enthält,
wobei die Partikel des zweiten Materials einen durchschnittlichen Partikeldurchmesser aufweisen, der kleiner ist als der durchschnittliche Partikeldurchmesser der Zeolithpartikel des ersten Materials, und wobei die Partikel des zweiten Materials zwischen den Zeolithpartikeln des ersten Materials vorhanden sind.

11. Vakuumdämmplatte (1) nach Anspruch 8 oder 9,
wobei das Gasadsorptionsmittel (4) in einer Schichtform angeordnet ist, wobei ein äußerster Bereich der Schicht in Dickenrichtung überwiegend mit dem ersten Material bedeckt ist, und
wobei das äußere Abdeckmaterial (2) eine schichtlose Metallstruktur aufweist.

12. Vakuumdämmplatte (1) nach einem der Ansprüche 1 bis 11,
wobei das Isoliermaterial (5) eine Wärmeleitfähigkeit von 0,1 W/(m·K) oder weniger und eine Dicke von 2 mm oder mehr aufweist.

13. Herstellungsverfahren für eine Vakuumdämmplatte (1) mit Isolationsvermögen, wobei die Vakuumdämmplatte (1) Folgendes aufweist:
ein Kernmaterial (3) mit einer Plattenform, ein Gasadsorptionsmittel (4) zum Adsorbieren von Gas und ein äußeres Abdeckmaterial (2), wobei das Kernmaterial (3) und das Gasadsorptionsmittel (4) in dem äußeren Abdeckmaterial (2) angeordnet sind,
und wobei das Herstellungsverfahren die folgenden Schritte umfasst:
- Einsetzen des Kernmaterials (3) in das äußere Abdeckmaterial (2);
- Bereitstellen des Gasadsorptionsmittels (4), das ein Gasdesorptionsvermögen aufweist, ein Gas bei 400 °C oder mehr zu desorbieren, wobei das Gasadsorptionsmittel (4) von dem Kernmaterial (3) getrennt wird;
- Erhitzen des bereitgestellten Gasadsorptionsmittels (4) auf 400 °C oder mehr und Einsetzen des Gasadsorptionsmittels (4) in ein Isoliermaterial (5) mit einer Heißschrumpfungstemperatur von 400 °C, das anorganische Fasern aufweist, um so eine Gasadsorptionspackung (6) bereitzustellen;
- Anordnen der bereitgestellten Gasadsorptionspackung (6) an einem Außenumfang des in das äußere Abdeckmaterial (2) eingesetzten Kernmaterials (3); und
- Versiegeln des äußeren Abdeckungsmaterials (2), nachdem das Innere des äußeren Abdeckmaterials (2), in dem die Gasadsorptionspackung (6) angeordnet ist, unter Vakuum gesetzt worden ist,
wobei das Isoliermaterial (5) von dem Kernmaterial (3) getrennt ist.

## Revendications

1. Panneau d'isolation sous vide (1) ayant des performances d'isolation, comprenant un matériau central (3) ayant une forme de plaque, un adsorbant de gaz (4) pour adsorber un gaz et un matériau de couverture extérieur (2), le matériau central (3) et l'adsorbant de gaz (4) étant agencés dans le matériau de couverture extérieur (2), dans lequel l'adsorbant de gaz (4) a une capacité de désorption de gaz pour désorber un gaz à 400 °C ou plus,
**caractérisé en ce que**
le panneau d'isolation sous vide (1) comprend en outre un bloc d'adsorption de gaz (6) dans lequel l'adsorbant de gaz (4) est recouvert d'un matériau d'isolation (5) ayant une température de retrait à chaud de 400 °C ou plus et comprenant des fibres inorganiques,
dans lequel le matériau d'isolation (5) est séparé du matériau central (3).

2. Panneau d'isolation sous vide (1) selon la revendication 1,
dans lequel le bloc d'adsorption de gaz (6) est agencé sur une périphérie extérieure du matériau central (3).

3. Panneau d'isolation sous vide (1) selon la revendication 1 ou 2,
dans lequel le matériau central (3) comprend une partie concave ou une partie découpée dans une partie de la périphérie extérieure et
dans lequel le bloc d'adsorption de gaz (6) est agencé sur la périphérie extérieure de manière à remplir la partie concave ou la partie découpée.

4. Panneau d'isolation sous vide (1) selon l'une quelconque des revendications 1 à 3, dans lequel le bloc d'adsorption de gaz (6) est configuré en une forme longitudinale le long d'un côté de la forme extérieure du matériau central (3).

5. Panneau d'isolation sous vide (1) selon l'une quelconque des revendications 1 à 4,
dans lequel les fibres inorganiques du matériau d'isolation ont une structure en forme de feuille,
dans lequel l'adsorbant de gaz (4) est maintenu dans un état où il est interposé entre des surfaces de la structure en forme de feuille et
dans lequel on fait adhérer les surfaces de la structure en forme de feuille les unes aux autres dans au moins une partie d'une périphérie de l'adsorbant de gaz (4) ou les surfaces de la structure en forme de feuille sont thermosoudées les unes aux autres dans ladite au moins une partie.

6. Panneau d'isolation sous vide (1) selon l'une quelconque des revendications 1 à 5,
dans lequel les fibres inorganiques du matériau d'isolation ont une structure en forme de feuille,
dans lequel l'adsorbant de gaz (4) est maintenu dans un état où il est enroulé avec la structure en forme de feuille.

7. Panneau d'isolation sous vide (1) selon l'une quelconque des revendications 1 à 6, comprenant en outre un matériau d'emballage (9) configuré pour recouvrir le matériau d'isolation (5), dans lequel le matériau d'emballage (9) est un tissu de verre ou un tissu d'alumine.

8. Panneau d'isolation sous vide (1) selon l'une quelconque des revendications 1 à 7, dans lequel l'adsorbant de gaz (4) comprend un matériau capable d'adsorber un gaz à température ambiante et de désorber le gaz adsorbé en étant chauffé au moins partiellement par irradiation par micro-ondes.

9. Panneau d'isolation sous vide (1) selon l'une quelconque des revendications 1 à 7,
dans lequel l'adsorbant de gaz (4) comprend un matériau obtenu en mélangeant un premier matériau dont on ne peut pas augmenter la température à 400 °C par irradiation par micro-ondes et un second matériau dont on peut augmenter la température à 400 °C ou plus par irradiation par micro-ondes et
dans lequel le premier matériau ou le second matériau comprend un matériau d'adsorption de gaz.

10. Panneau d'isolation sous vide (1) selon la revendication 9,
dans lequel le premier matériau comprend des particules de zéolite,
dans lequel le second matériau contient des particules de graphite ou des particules de fer,
dans lequel les particules du second matériau ont un diamètre moyen de particule inférieur à un diamètre moyen de particule des particules de zéolite du premier matériau et
dans lequel les particules du second matériau sont présentes entre les particules de zéolite du premier matériau.

11. Panneau d'isolation sous vide (1) selon la revendication 8 ou 9,
dans lequel l'adsorbant de gaz (4) est agencé en forme de couche,
dans lequel une partie la plus extérieure de la couche dans la direction de l'épaisseur est recouverte principalement du premier matériau et
dans lequel le matériau de couverture extérieur (2) présente une structure exempte de couche métallique.

12. Panneau d'isolation sous vide (1) selon l'une quelconque des revendications 1 à 11, dans lequel le matériau d'isolation (5) a une conductivité thermique de 0,1 W/(m·K) ou moins et une épaisseur de 2 mm ou plus.

13. Procédé de fabrication d'un panneau d'isolation sous vide (1) ayant des performances d'isolation, le panneau d'isolation sous vide (1) comprenant un matériau central (3) ayant une forme de plaque, un adsorbant de gaz (4) pour adsorber un gaz et un matériau de couverture extérieur (2), le matériau central (3) et l'adsorbant de gaz (4) étant agencés dans le matériau de couverture extérieur (2), le procédé de fabrication comprenant les étapes suivantes consistant à :
- insérer le matériau central (3) dans le matériau de couverture extérieur (2) ;
- préparer l'adsorbant de gaz (4) ayant une capacité de désorption de gaz pour désorber un gaz à 400 °C ou plus, l'adsorbant de gaz (4) étant séparé du matériau central (3) ;
- chauffer l'adsorbant de gaz préparé (4) à 400 °C ou plus et insérer l'adsorbant de gaz (4) dans un matériau d'isolation (5) ayant une température de retrait à chaud de 400 °C et comprenant des fibres inorganiques, pour préparer ainsi un bloc d'adsorption de gaz (6) ;
- agencer le bloc d'adsorption de gaz préparé (6) sur une périphérie extérieure du matériau central (3) inséré dans le matériau de couverture extérieur (2) ; et
- sceller le matériau de couverture extérieur (2) après avoir dépressurisé un intérieur du matériau de couverture extérieur (2) dans lequel le bloc d'adsorption de gaz (6) est agencé,
dans lequel le matériau d'isolation (5) est séparé du matériau central (3).
